(19) **Europäisches Patentamt**

**European Patent Office**

**Office européen des brevets**

(11) **EP 1 213 458 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
*F02D 41/14* *(2006.01)*   *F02D 41/02* *(2006.01)*
*F01N 3/08* *(2006.01)*

(21) Anmeldenummer: **01127310.9**

(22) Anmeldetag: **19.11.2001**

(54) **Verfahren und Vorrichtung zum Betreiben eines magerlauffähigen Ottomotors**

Method and device for operating a lean burn spark ignition engine

Procédé et dispositif de commande d'un moteur à allumage commandé fonctionnant avec un mélange pauvre

(84) Benannte Vertragsstaaten:
**DE ES FR GB IT**

(30) Priorität: **11.12.2000 DE 10061645**

(43) Veröffentlichungstag der Anmeldung:
**12.06.2002 Patentblatt 2002/24**

(73) Patentinhaber: **Volkswagen Aktiengesellschaft 38436 Wolfsburg (DE)**

(72) Erfinder:
• **Pott, Ekkehard, Dr. 38518 Gifhorn (DE)**
• **Zillmer, Michael, Dr. 38173 Sickte (DE)**

(74) Vertreter: **Pohlmann, Bernd Michael et al Reinhardt & Pohlmann Patentanwälte Günthersburgallee 40 60316 Frankfurt am Main (DE)**

(56) Entgegenhaltungen:
WO-A-99/40296          DE-A- 19 858 990
US-A- 5 910 096

• DATABASE WPI Section PQ, Week 199925 Derwent Publications Ltd., London, GB; Class Q51, AN 1999-297196 XP002198152 & JP 11 101147 A (MATSUDA KK), 13. April 1999 (1999-04-13)

## Beschreibung

Die vorliegende Beschreibung betrifft ein Verfahren zum Betreiben eines magerlauffähigen Ottomotors, insbesondere eines schichtladefähigen direkteinspritzenden Ottomotors, gemäß dem Oberbegriff des Anspruchs 1. Sie betrifft auch einen Ottomotor und ein Kraftfahrzeug zur Durchführung dieses Verfahrens.

Magerlauffähige Ottomotoren, insbesondere Direkteinspritzer, zeichnen sich zwar durch besonders günstige Verbrauchswerte aus, sind jedoch zur Einhaltung "scharfer" Abgasgrenzwerte auf eine katalytische Abgasnachbehandlung durch $NO_x$-Speicherkatalysatoren angewiesen, die einen großserienmäßigen Einsatz entsprechender Motoren und eine konsequente Ausnutzung des mit ihnen verbundenen sehr großen Verbrauchseinsparpotentials sehr erschwert und dazu geführt hat, daß auf dem Markt (insbesondere in Japan) bisher erst sehr wenige Fahrzeugmodelle mit einer entsprechenden Motorisierung erschienen sind. Diese beruhen im wesentlichen auf Mager/Mix-Konzepten mit entsprechenden Kompromissen zwischen Emission und Kraftstoffverbrauch oder ausschließlich auf einer relativ verbrauchsungünstigen homogen-stöchiometrischen Betriebsweise, um mit konventionellen 3-Wege-Abgasnachbehandlungstechnologien auszukommen.

Die Hauptprobleme der $NO_x$-Speicherkatalysator-Technologie bestehen zum einen in einer (bei gewissen Betriebsbedingungen allerdings im wesentlichen reversiblen) schleichenden Vergiftung und Desaktivierung der Katalysatoren durch den im Kraftstoff enthaltenen Schwefel, die regelmäßige Katalysatorregenerationen erforderlich macht, und zum anderen in ihrem eingeschränkten Arbeitstemperaturfenster zwischen einer Anspringtemperatur von etwa 200°C und einer maximalen Arbeitstemperatur von etwa 500°C, oberhalb der keine effiziente Einlagerung der Stickoxide mehr erfolgt, so daß keine ordnungsgemäße Abgasreinigung mehr gewährleistet ist. Für einen Magerbetrieb müssen somit nicht nur brennverfahrensseitige Randbedingungen eingehalten werden sondern es müssen insbesondere stets auch hinreichend niedrige Katalysatortemperaturen gewährleistet sein, um die vorgeschriebenen "scharfen" Abgasnormen erfüllen zu können.

Bei niedrigen Drehzahlen und Lasten können magerlauffähige Ottomotoren oder Magermotoren geschichtetmager betrieben werden, so daß die Abgas- und Katalysatortemperatur noch hinreichend niedrig sind, um eine ordnungsgemäße Abgasreinigung zu gewährleisten, wobei sich durch diese Betriebsweise die günstigsten Verbrauchswerte erreichen lassen. Bei etwas höheren Drehzahlen und Lasten ist hierbei der Einsatz von Abgaskühlungsmaßnahmen zur Senkung der $NO_x$-Speicherkatalysatortemperatur bekannt, mit denen sich im dynamischen Betrieb prozentual höhere Schichtanteile erzielen lassen.

Bei hoher Motorlast oder bei geforderter hoher Beschleunigung mit entsprechend hohen Abgas- und Katalysatortemperaturen wird jedoch auf einen homogen-stöchiometrischen Betriebsmodus und eine 3-Wege-Abgasnachbehandlung umgeschaltet, wobei sich unter Inkaufnahme relativ hoher Stickoxidrohemissionen nach wie vor recht günstige Verbrauchswerte realisieren lassen.

In einem mittleren Drehzahl und Lastbereich, in dem einerseits brennverfahrensseitig zwar nur noch ein eingeschränkter oder gar kein Schichtbetrieb mehr möglich ist und andererseits aber die Abgas- und Katalysatortemperatur noch hinreichend niedrig zur Gewährleistung einer ordnungsgemäßen Abgasreinigung ist, ist auch ein homogen-magerer Betrieb möglich, der gegenüber der homogen-stöchiometrischen Betriebsweise einen Verbrauchsvorteil von etwa 5 - 8% aufweist, im Vergleich zu dem Schichtbetrieb jedoch durch einen Verbrauchsnachteil von 5 - 10% gekennzeichnet ist. Die homogen-magere Betriebsweise wird somit sinnvollerweise lediglich im häufig angefahrenen mittleren Teillastbereich eingestellt, in dem der Schichtbetrieb nicht mehr möglich ist, aber der homogen-stöchiometrische Betrieb wegen der noch zu niedrigen Lastanforderungen noch nicht zwingend erforderlich ist. Bei hinreichend niedrigen Drehzahlen und Lasten wird die homogen-magere Betriebsweise hingegen nicht zugelassen, da hier der deutlich verbrauchsgünstigere Schichtbetrieb sinnvoller ist.

Die Aufgabe der vorliegenden Erfindung besteht in der Schaffung eines entsprechenden Betriebsverfahrens für einen magerlauffähigen Ottomotor, insbesondere Direkteinspritzer, das nicht nur durch günstigere Verbrauchswerte als die herkömmlichen Verfahren gekennzeichnet ist sondern auch die Einhaltung schärfster Abgasgrenzwerte gewährleistet, wie sie beispielsweise bereits bis zum Jahre 2005 verbindlich vorgeschrieben sind. Die Aufgabe besteht zudem in der Schaffung eines Ottomotors und eines Kraftfahrzeugs zur Durchführung dieses Verfahrens.

Diese Aufgabe wird bei einem gattungsgemäßen Verfahren erfindungsgemäß dadurch gelöst, daß die Katalysatortemperatur in einem Betriebsbereich, in dem infolge der hohen Abgas- und Katalysatortemperaturen herkömmlicherweise lediglich ein homogenstöchiometrischer Betrieb mit relativ ungünstigen Verbrauchswerten möglich ist, durch Kühlung der dem $NO_x$-Speicherkatalysator zugeführten Abgase und/oder des $NO_x$-Speicherkatalysators selbst gezielt abgesenkt und stattdessen ein deutlich verbrauchsgünstigerer homogen-magerer Betriebsmodus eingestellt wird. In einem mittleren, im Realverkehr häufig angefahrenen kundenrelevanten Drehzahlbereich zwischen etwa 2500 und 3500 $min^{-1}$ und einem effektiven Mitteldruck zwischen etwa 4 und 6 bar, insbesondere 4,5 - 6 bar, wird hierbei ein homogen-Mageranteil von zumindest etwa 30% eingestellt, was zu einer merklichen Verbrauchsabsenkung führt. Bei einer bevorzugten Verfahrensvariante mit besonders günstigen Verbrauchswerten wird sogar ein homogen-Mageranteil von zumindest etwa 40%, insbesondere jedoch zumindest etwa 50%, eingestellt.

Zur Einhaltung der aktuellen sowie der zumindest in den nächsten 5 Jahren vorgesehenen oder zu erwartenden Abgasnormen wird die Katalysatortemperatur hierbei so gesteuert, daß die $NO_x$-Emission hinter dem $NO_x$-Speicherkatalysator höchstens etwa 10 g/h und/oder der mittlere $NO_x$-Konvertierungsgrad des NOx-Speicherkatalysators zumindest etwa 70% beträgt, so daß das erfindungsgemäße Verfahren nicht nur sehr verbrauchsgünstig ist sondern auch äußerst günstige Emissionswerte ermöglicht. Der Ottomotor und der $NO_x$-Speicherkatalysator werden vorzugsweise sogar so betrieben, daß die $NO_x$-Emission hinter dem $NO_x$-Speicherkatalysator höchstens etwa 6 g/h und/oder der mittlere $NO_x$-Konvertierungsgrad des NOx-Speicherkatalysators zumindest etwa 85% beträgt.

Zur Steuerung der Katalysatortemperatur wird hierbei vorzugsweise eine Kühlvorrichtung mit einer steuerbaren oder schaltbaren Kühlleistung verwendet, um einerseits erforderliche Kühlmaßnahmen bedarfsgerecht und effektiv durchführen zu können und um andererseits notwendige Katalysator-Heizmaßnahmen, wie beispielsweise bei der Durchführung anstehender Regenerations- oder De-Sulfatierungsvorgänge oder beim schnellen Aufheizen auf die Anspringtemperatur, nicht durch eine für einen Aufheizvorgang kontraproduktive Wärmeabfuhr zu behindern und zu verzögern. Die Durchströmung der Kühlvorrichtung mit Abgas oder einem Kühlmedium ist hierbei gegenüber einer durch Konstruktion, Einbaulage im Fahrzeug und momentanem Fahrzustand vorgegebenen maximalen Durchströmung je nach Bedarf gezielt einstellbar oder steuerbar, was auch eine Zu- und Abschaltbarkeit der Kühlvorrichtung zur selektiven Durchführung von Kühlmaßnahmen umfaßt.

Zur Steigerung der Kühlleistung wird hierbei vorzugsweise eine Kühlvorrichtung oder ein Wärmetauscher mit vorzugsweise schaltbar ausgebildeten Führungseinrichtungen für eine Kühlluftströmung, wie beispielsweise Luftleitbleche und/oder NACA-Düsen und/oder speziell ausgebildete strömungsbeeinflussende Schallschluck-Unterbodenkapseln, verwendet, mit denen die Luftströmung im Kfz-Unterbodenbereich gezielt um und/oder durch die Kühlvorrichtung oder den Wärmetauscher geleitet wird und dadurch für eine deutliche Verbesserung der Wärmeabfuhr sorgt.

Alternativ oder ergänzend zu einer Luftkühlung kann auch ein spezielles Kühlmittel, wie z.B. Wasser, eingesetzt werden, mit dem sich eine spürbar bessere Wärmeabfuhr als bei einer Luftkühlung erreichen läßt.

Zur Kühlung der Abgase und/oder des $NO_x$-Speicherkatalysators auf das gewünschte Temperaturniveau wird vorzugsweise eine Kühlvorrichtung verwendet, deren Kühlleistung um zumindest 50% höher ist als die Kühlleistung einer dem Ottomotor zugeordneten herkömmlichen Abgasanlage, die keine zusätzliche Kühlvorrichtung umfaßt und lediglich durch die normale Luftströmung im Kfz-Unterbodenbereich passiv gekühlt wird.

Vorzugsweise wird eine Kühlvorrichtung mit einer gegenüber einer herkömmlichen Abgasanlage zusätzlichen Kühlleistung von zumindest etwa 0,8 kW, insbesondere zumindest etwa 1,0 kW, verwendet. Unter einer bei herkömmlichen Kraftfahrzeugen üblichen Abgasanlage wird die konstruktiv kürzestmögliche Verbindung zwischen Zylinderkopf, Vorkatalysator (sofern vorhanden) und $NO_x$-Speicherkatalysator verstanden. Bei einer bevorzugten Verfahrensvariante mit einer besonders effektiven Abgas- und Katalysatorkühlung wird eine Kühlvorrichtung mit einer Kühlleistung von zumindest etwa 1,5 kW zusätzlich verwendet.

Bei Vollast des Ottomotors erfolgt die Kühlung vorzugsweise mit einer zusätzlichen Kühlleistung von bis zu etwa 30 kW oder etwa 22 kW pro Liter Hubraum oder bis zu etwa 0,5 kW pro kW Motorleistung.

Die dem $NO_x$-Speicherkatalysator zugeführten Abgase bzw. der Katalysator selbst werden durch die genannten Kühlmaßnahmen mit den angegebenen Kühlleistungen vorzugsweise auf $\leq 485°C$, insbesondere $\leq 475°C$, abgekühlt, um eine möglichst hohe Katalysatoraktivität mit einer entsprechend hohen Stickoxideinlagerung zu gewährleisten. Bei der angegebenen bevorzugten Verfahrensvariante mit einer besonders effektiven Abgas- und Katalysatorkühlung werden die Abgase durch die hohe Kühlleistung von zumindest etwa 1,5 kW sogar auf $\leq 450°C$ abgekühlt.

Zur Überprüfung und zur Gewährleistung einer ordnungsgemäßen Einhaltung der erforderlichen katalysatorseitigen Randbedingungen wird die Katalysatortemperatur vorzugsweise kontinuierlich bestimmt, mit vorgegebenen oder gewünschten Temperaturwerten verglichen und als Steuergröße zur Einstellung der Motorbetriebsweise verwendet. Die Bestimmung der Katalysatortemperatur erfolgt hierbei vorzugsweise mittels je eines dem $NO_x$-Speicherkatalysator vor- bzw. nachgeschalteten Temperatursensors und/oder mittels zumindest eines direkt an dem $NO_x$-Speicherkatalysator angebrachten Temperaturfühlers, deren Temperatursignale einer zugeordneten Motorsteuerungseinrichtung zur Erfassung und Auswertung zugeführt werden. Die Katalysatortemperatur kann jedoch auch durch geeignete Modellierungen oder Modellrechnungen bestimmt werden.

Zur präzisen Regelung des Mager- und $NO_x$-Regenerationsbetriebes, insbesondere zur Erfassung eventueller $NO_x$-Durchbrüche und zur Erkennung eventueller Katalysatorunregelmäßigkeiten oder -schädigungen, wird zudem noch vorzugsweise die $NO_x$-Konzentration im Abgas mittels eines hinter dem $NO_x$-Speicherkatalysator angeordneten $NO_x$-Sensors gemessen, dessen Meßsignale ebenfalls an der Motorsteuerungseinrichtung anliegen.

Zur Durchführung dieses erfindungsgemäßen Verfahrens wird vorzugsweise ein durch ein softwaremäßiges und/oder konstruktive Auslegung für eine Homogen-magere-Betriebsbereichserweiterung zu höheren Drehzahlen und Lasten hin speziell ausgelegter Ottomotor verwendet.

Ein erfindungsgemäßes Kraftfahrzeug zur Durchführung des beschriebenen Verfahrens umfaßt:

- einen magerlauffähigen Ottomotor, insbesondere einen schichtladefähigen Direkteinspritzer, der vorzugsweise durch eine softwaremäßige und/oder konstruktive Auslegung speziell für die oben beschriebene Betriebsweise ausgelegt ist;

- eine dem Ottomotor nachgeschaltete Abgasanlage mit einem $NO_x$-Speicherkatalysator und einer Kühlvorrichtung zur Kühlung des $NO_x$-Speicherkatalysators und/oder der ihm zugeführten Abgase, wobei die Abgasanlage vorzugsweise noch zumindest einen dem $NO_x$-Speicherkatalysator vor- und/oder nachgeschalteten Temperatursensor und/oder zumindest einen an dem $NO_x$-Speicherkatalysator angebrachten Temperatursensor sowie einen dem $NO_x$-Speicherkatalysator nachgeschalteten $NO_x$-Sensor umfaßt; und

- eine zugeordnete Motor-Steuerungseinrichtung zur Steuerung der oben beschriebenen erfindungsgemäßen Motor- und Katalysatorbetriebsweise sowie zur Erfassung und Auswertung der Meßsignale der genannten Sensoren und zur betriebspunktabhängigen Durchführung von Emissions- und Temperaturmodellierungen.

Die Kühlvorrichtung kann alle bekannten passiv wirksamen und aktiv schaltbaren Abgas-und/oder Katalysatorkühlungsmaßnahmen, wie z.B. eine Krümmerkatkühlung, mehrflutige Vorrohre, luft- oder wassergekühlte Wärmetauscher stromauf des $NO_x$-Speicherkatalysators umfassen. Sie ist jedoch vorzugsweise durch

- eine Steuerungseinrichtung für die Kühlleistung;
- Führungseinrichtungen für eine Kühlluftströmung, wie z.B. geeignet ausgebildete vorzugsweise schaltbare Luftleitbleche und/oder NACA-Düsen und/oder speziell ausgebildete strömungsbeeinflussende Schallschluck-Unterbodenkapseln;
- ein anderes Kühlmittel als Luft, das alternativ oder zusätzlich zu einer Luftkühlung eingesetzt werden kann; und/oder
- eine um etwa 50% höhere Kühlleistung als eine dem Ottomotor zugeordnete herkömmliche Abgasanlage ohne zusätzliche Kühlvorrichtung gekennzeichnet, da sich hierdurch eine äußerst effektive und bedarfsgerechte Kühlung der Abgase und/oder des $NO_x$-Speicherkatalysators erreichen läßt. Die zusätzliche Kühlleistung liegt vorzugsweise bei zumindest etwa 0,8 kW, insbesondere jedoch bei zumindest etwa 1,0 kW. Eine besonders bevorzugte Ausführungsform besitzt sogar eine zusätzliche Kühlleistung von zumindest etwa 1,5 kW. Bei Vollast des Ottomotors beträgt die zusätzliche Kühlleistung vorzugsweise bis zu etwa 30 kW, oder etwa 22 kW pro Liter Hubraum oder etwa 0,5 kW pro kW Motorleistung.

Weitere Einzelheiten, Merkmale und Vorteile der vorliegenden Erfindung ergeben sich nicht nur aus den zugehörigen Ansprüchen - für sich und/oder in Kombination - sondern auch aus der nachgeschalteten Beschreibung eines erfindungsgemäßen Ausführungsbeispiels in Verbindung mit

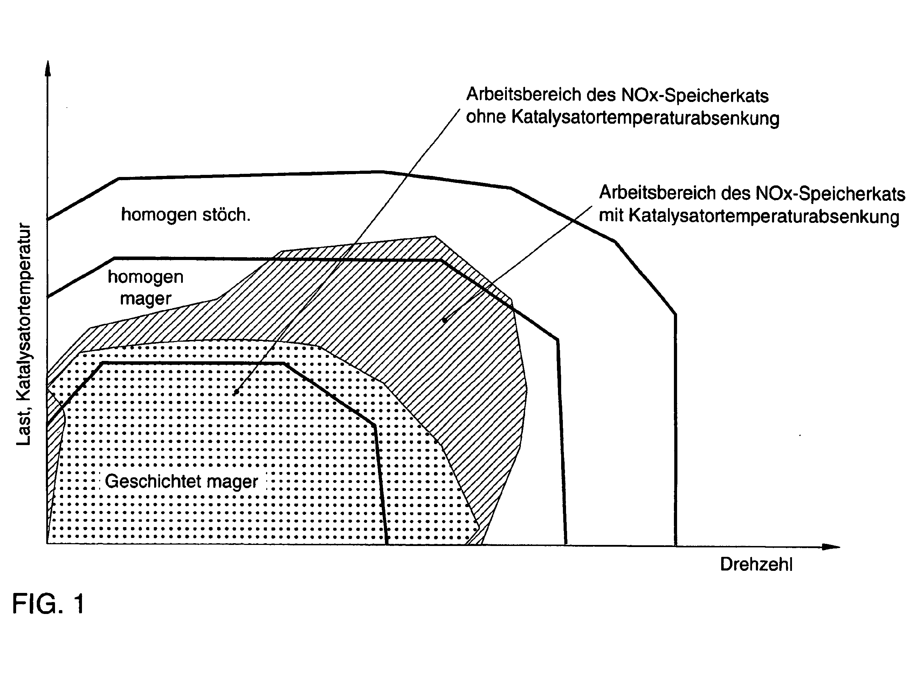

Fig. 1, die die unterschiedlichen Arbeitsbereiche eines DI-Ottomotors in Abhängigkeit von Drehzahl, Last und Katalysatortemperatur und die Auswirkung einer erfindungsgemäßen Katalysatortemperaturabsenkung auf die Einstellbarkeit einer homogen-mageren Betriebsweise schematisch darstellt.

Wie oben bereits erwähnt wurde, werden DI-Ottomotoren vorzugsweise geschichtet mager betrieben, da sich durch diese Betriebsweise die niedrigsten Verbrauchswerte erreichen lassen. Der bevorzugte Schichtbetrieb ist jedoch nicht nur vom Brennverfahren her auf niedrige Drehzahlen und Lasten beschränkt sondern auch von der Katalysatortemperatur, da durch die mit zunehmender Drehzahl und Last rasch ansteigende Abgastemperatur der thermische Arbeitsbereich eines nachgeschalteten $NO_x$-Speicherkatalysators rasch überschritten wird, oberhalb dessen die Katalysatoraktivität bzw. der Katalysatorwirkungsgrad stark abnehmen, so daß keine ordnungsgemäße Stickoxideinlagerung mehr gewährleistet ist. Die geschichtet magere Betriebsweise ist daher in Fig. 1 auf den entsprechend gekennzeichneten ursprungsnahen Bereich beschränkt.

In einem Drehzahlbereich zwischen 1500 und 2500 min$^{-1}$ und bei einem effektiven Mitteldruck zwischen 1,5 und 2,5 bar beträgt der vom Brennverfahren her mögliche Schichtanteil noch 100%. Hierbei ergibt sich eine $NO_x$-Emission vor dem $NO_x$-Speicherkatalysator von etwa 20 - 60 g/h und hinter dem $NO_x$-Speicherkatalysator im Magerbetrieb von etwa 0,2 - 1 g/h. Die Temperatur des $NO_x$-Speicherkatalysators liegt zwischen etwa 200 und 280°C, so daß bezüglich des einzuhaltenden Arbeitstemperaturfensters von etwa 200 - 500°C ein unkritischer Katalysatorzustand vorliegt und auch im Hinblick auf eine ordnungsgemäße Abgasreinigung ein Schichtanteil von 100% einstellbar ist.

Bei höheren Drehzahlen und Lasten ist brennverfahrensseitig nur noch ein eingeschränkter Schichtbetrieb möglich, so daß teilweise auf die etwa um 5 - 10% verbrauchsungünstigere homogen-magere Betriebsweise ausgewichen werden muß, deren Arbeitsbereich sich in Fig. 1 zu höheren Drehzahlen, Lasten und Katalysatortemperaturen hin demgemäß unmittelbar an dem geschichtete mageren Arbeitsbereich anschließt.

In dem im wesentlichen MVEG-relevanten Drehzahlbereich zwischen etwa 2000 und 3000 min$^{-1}$ und bei einem effektiven Mitteldruck zwischen etwa 3 - 4 bar beträgt der vom Brennverfahren mögliche Schichtanteil nur noch etwa 50%, während vom Brennverfahren her ein Homogen-Mageranteil von 100% einstellbar ist. Die $NO_x$-Emissionen betra-

gen hier vor dem $NO_x$-Speicherkatalysator etwa 30 - 80 g/h und hinter dem Speicherkatalysator im Magerbetrieb etwa 0,3 - 25 g/h.

Die höheren Drehzahlen und Lasten sind jedoch auch mit einer höheren Abgas- und Katalysatortemperatur verbunden, so daß die Temperatur des $NO_x$-Speicherkatalysators zwischen etwa 320 und 450°C liegt. Bei diesen Katalysatortemperaturen beträgt der von der Abgasreinigung her mögliche Schichtanteil eben so wie der vom Brennverfahren her mögliche Schichtanteil 50%, während der von der Abgasreinigung her mögliche Homogen-Mageranteil 10% niedriger ist als der vom Brennverfahren her mögliche Homogen-Mageranteil und nur noch 90% beträgt.

Da bei einer Katalysatortemperatur von 450°C und einer $NO_x$-Rohemission von zugleich 130 g/h nur noch eine unzureichende $NO_x$-Konvertierung möglich ist, beträgt der von der Abgasreinigung erforderliche homogen-stöchiometrische Anteil (Lambda = 1 - Anteil) bereits 10%. In diesem verbrauchsungünstigeren Arbeitsmodus, dessen Arbeitsbereich den homogen-mageren Arbeitsbereich in Fig. 1 im Bereich höherer Drehzahlen, Lasten und Katalysatortemperaturen umgibt, arbeitet der $NO_x$-Speicherkatalysator mit 3-Wege-Eigenschaften.

In dem im wesentlichen kundenrelevanten Arbeitsbereich zwischen etwa 2500 und 3500 min$^{-1}$ und bei einem effektiven Mitteldruck zwischen 4 und 6 bar, insbesondere 4,5 - 6 bar, ist vom Brennverfahren her nur noch ein Schichtanteil von 0% möglich. Der vom Brennverfahren her mögliche Homogen-Mageranteil beträgt nur noch etwa 60%, während vom Brennverfahren her bereits ein Lambda = 1 - Anteil von etwa 40% erforderlich ist. Die $NO_x$-Emissionen vor dem Speicherkatalysator betragen etwa 100 - 150 g/h und hinter dem $NO_x$-Speicherkatalysator mehr als etwa 20 g/h im Magerbetrieb.

Die Temperatur des $NO_x$-Speicherkatalysator liegt bereits zwischen etwa 420 - 600°C, so daß zur Gewährleistung einer ordnungsgemäßen Abgasreinigung herkömmlicherweise kein Homogen-Magerbetrieb mehr einstellbar ist, d.h. daß der Homogen-Mageranteil 0% beträgt. Der von der Abgasreinigung her erforderliche Lambda = 1 - Anteil beträgt hingegen bereits 100%, wobei wegen der hohen Katalysatortemperaturen und $NO_x$-Emissionen nur ein unzureichender $NO_x$-Umsatz möglich ist.

Die angegebenen Temperatur- und Emissionswerte sowie der von der Abgasreinigung her erforderliche Lambda = 1 - Anteil von 100%und die damit verbundene Unzulässigkeit einer homogen-mageren Betriebsweise beziehen sich auf eine herkömmliche Abgasanlage ohne Zusatzkühlung, die lediglich durch die normale Luftströmung im Kfz-Unterbodenbereich gekühlt wird.

Ein Kraftfahrzeug mit einem 1,4 Liter DI-Ottomotor (Direkteinspritzer) und Fünfganggetriebe hat bei 100 km/h im 5. Gang bei $\lambda$ = 1,0 einen Abgasmassenstrom von 50 kg/h, eine Abgastemperatur nach Vorkatalysator von 640°C und eine Abgas-Eintrittstemperatur in den $NO_x$-Speicherkatalysator von 540°C, so daß die Wärmeabgabe der Abgasanlage bei einer Umgebungstemperatur von 25°C und einer Luftfeuchte von 60%

$$P_{ab} = m_{Ab} - C_{P,AB} \bullet \text{delta } T_{AB} = 50/3600 \bullet 1,05 \bullet (640-540) \text{ kW} = 1,458 \text{ kW}$$

.

beträgt (Ab = Abgas).

Bei erfindungsgemäßer Verwendung einer Kühlvorrichtung der oben beschriebenen Art mit 0,8 kW zusätzlicher Kühlleistung bei den angegebenen Bedingungen für Abgasmassenstrom, Temperatur und Luftfeuchte ergibt sich eine Absenkung der Abgas-Eintrittstemperatur auf etwa 485°C.

Da mit dieser Eingangstemperatur der $NO_x$-Speicherkatalysator unterhalb seiner maximalen Mager-$NO_x$-Arbeitstemperatur von 500°C liegt, kann ein Magerbetrieb des Motors zugelassen werden. Da der Motorbetriebspunkt last- und/oder drehzahlmäßig bereits außerhalb des verbrauchsgünstigsten Schichtbetriebsfensters liegt, kann noch auf den weniger verbrauchsgünstigen Magerbetrieb umgeschaltet werden, der jedoch immer noch bessere Verbräuche als der stöchiometrische Betrieb aufweist. Bei einem Magerbetrieb mit Lambda = 1,4 steigt der Abgasmassenstrom auf 65 kg/h und die Abgastemperatur nach dem Vorkatalysator sinkt auf 600°C. Die Eintrittstemperatur in den $NO_x$-Speicherkatalysator beträgt bei der herkömmlichen Abgasanlage 525°C. Die Kühlleistung der herkömmlichen Abgasanlage beträgt somit 1,422 kW und ändert sich nur geringfügig. Die $NO_x$-Speicherkatalysatortemperatur liegt jedoch außerhalb des Mager-$NO_x$-Arbeitsfensters, so daß der Magerbetrieb wegen der dann sehr hohen $NO_x$ Emission stromab des $NO_x$-Speicherkatalysators nicht zugelassen werden kann.

Bei erfindungsgemäßer Verwendung einer Kühlvorrichtung der oben beschriebenen Art mit 0,8 kW zusätzlicher Kühlleistung ergibt sich im Magerbetrieb eine Absenkung der Abgas-Eintrittstemperatur auf etwa 483°C, durch die sich ein deutlich höherer Katalysatorwirkungsgrad mit einer entsprechend merklichen Verringerung der $NO_x$ Emissionswerte auf < 10 g/h erreichen läßt. Zudem ist im Unterschied zu einer herkömmlichen, ungekühlten Abgasanlage ein Homogen-Mageranteil von zumindest etwa 30% einstellbar, der mit einer spürbaren Verbrauchssenkung verbunden ist. Die entsprechende Vergrößerung des Homogen-Mager-Arbeistbereiches ist in Fig. 1 schematisch dargestellt.

Mit einer zusätzlichen Kühlleistung von 1,0 kW läßt sich eine Absenkung der Abgas-Eintrittstemperatur auf 472°C und mit 1,5 kW zusätzlicher Kühlleistung sogar auf 445°C erreichen. Hierdurch lassen sich Homogen-Mageranteile von zuminest 40% bzw. zumindest 50% einstellen, die durch eine noch deutlichere Verbrauchsabsenkung gekennzeichnet sind.

Der Ottomotor und der zugeordnete $NO_x$-Speicherkatalysator sind hierbei so betreibbar, daß die $NO_x$-Emission hinter dem $NO_x$-Speicherkatalysator nur noch höchstens etwa 6 g/h und der $NO_x$-Konvertierungsgrad des $NO_x$-Speicherkatalysators zumindest etwa 85% beträgt, so daß durch das erfindungsgemäße Verfahren nicht nur alle derzeit gültigen sondern auch alle für die nächsten Jahren festgelegten Abgasvorschriften eingehalten werden.

**Patentansprüche**

1. Verfahren zum Betreiben eines magerlauffähigen Ottomotors, insbesondere eines schichtladefähigen direkteinspritzenden Ottomotors, mit einem nachgeschalteten $NO_x$-Speicherkatalysator durch last- und drehzahlabhängige Einstellung einer geschichtet-mageren, homogen-mageren oder homogen-stöchiometrischen Betriebsweise,
   **dadurch gekennzeichnet,**
   **daß** der Ottomotor innerhalb eines Kennfeldes mit den Werten Drehzahlbereich zwischen 2500 und 3500 $min^{-1}$ und effektiver Mitteldruck zwischen 4 und 6 bar zu zumindest 30% homogen mager betrieben wird, wobei die Katalysatortemperatur insbesondere durch Kühlung der dem $NO_x$-Speicherkatalysator zugeführten Abgase und/oder des $NO_x$-Speicherkatalysators so gewählt ist, daß in mindestens 70% dieses Betriebsfensters die $NO_x$-Emission hinter dem $NO_x$-Speicherkatalysator höchstens 10 g/h und/oder der mittlere $NO_x$-Konvertierungsgrad des $NO_x$-Speicherkatalysators zumindest 70% beträgt.

2. Verfahren nach Anspruch 1,
   **dadurch gekennzeichnet,**
   **daß** der Ottomotor mit einem homogen-Mageranteil über zumindest 40% des Kennfeldes betrieben wird.

3. Verfahren nach Anspruch 2,
   **dadurch gekennzeichnet,**
   **daß** der Ottomotor mit einem homogen-Mageranteil über zumindest 50% des Kennfeldes betrieben wird.

4. Verfahren nach einem der vorhergehenden Ansprüche,
   **dadurch gekennzeichnet,**
   **daß** der Ottomotor und der $NO_x$-Speicherkatalysator so betrieben werden, daß die $NO_x$-Emission hinter dem $NO_x$-Speicherkatalysator höchstens 6 g/h und/oder der mittlere $NO_x$-Konvertierungsgrad des $NO_x$-Speicherkatalysators zumindest 85% beträgt.

5. Verfahren nach einem der vorhergehenden Ansprüche,
   **dadurch gekennzeichnet,**
   **daß** zur Verminderung der Katalysatortemperatur eine Kühlvorrichtung mit

   - einer steuerbaren Kühlleistung und/oder
   - Führungseinrichtungen für eine Kühlluftströmung und/oder
   - einem anderen Kühlmittel als die Umgebungsluft und/oder
   - einer zumindest um 50% höheren Kühlleistung als eine dem Ottomotor

   zugeordnete herkömmliche Abgasanlage ohne zusätzliche Kühlvorrichtung verwendet wird.

6. Verfahren nach Anspruch 5,
   **dadurch gekennzeichnet,**
   **daß** als Führungseinrichtungen für die Luftströmung Luftleitbleche und/oder NACA-Düsen und/oder speziell ausgebildete strömungsbeeinflussende Schallschluck-Unterbodenkapseln verwendet werden.

7. Verfahren nach Anspruch 5 oder 6,
   **dadurch gekennzeichnet,**
   **daß** eine Kühlvorrichtung mit einer gegenüber herkömmlichen Abgasanlagen zusätzlichen Kühlleistung von zumindest 0,8 kW verwendet wird und/oder die dem $NO_x$-Speicherkatalysator zugeführten Abgase auf $\leq 485°C$ abgekühlt werden.

8. Verfahren nach Anspruch 7,

**dadurch gekennzeichnet,**
**daß** eine Kühlvorrichtung mit einer gegenüber herkömmlichen Abgasanlagen zusätzlichen Kühlleistung von zumindest 1,0 kW verwendet wird und/oder die dem $NO_x$-Speicherkatalysator zugeführten Abgase auf ungefähr ≤ 475°C abgekühlt werden.

9. Verfahren nach Anspruch 8,
   **dadurch gekennzeichnet,**
   **daß** eine Kühlvorrichtung mit einer gegenüber herkömmlichen Abgasanlagen zusätzlichen Kühlleistung von zumindest 1,5 kW verwendet wird und/oder die dem $NO_x$-Speicherkatalysator zugeführten Abgase auf ungefähr ≤ 450°C abgekühlt werden.

10. Verfahren nach Anspruch 9,
    **dadurch gekennzeichnet,**
    **daß** die Kühlung bei Vollast des Ottomotors mit einer gegenüber herkömmlichen Abgasanlagen zusätzlichen Kühlleistung von bis zu 30 kW oder 22 kW pro Liter Hubraum oder 0,5 kW pro kW Motorleistung erfolgt.

11. Verfahren nach einem der vorhergehenden Ansprüche,
    **dadurch gekennzeichnet,**
    **daß** die Katalysatortemperatur kontinuierlich bestimmt und als Steuergröße zur Einstellung der Motorbetriebsweise verwendet wird.

12. Kraftfahrzeug mit

    - einem magerlauffähigen Ottomotor, insbesondere schichtladefähiger direkteinspritzender Ottomotor;
    - einer zugeordneten Steuerungseinrichtung zur last- und drehzahlabhängigen
    Einstellung einer geschichtet-mageren, homogen-mageren oder homogen-stöchiometrischen Motorbetriebsweise; und
    - einer dem Ottomotor nachgeschalteten Abgasanlage mit einem $NO_x$-Speicherkatalysator,

    **dadurch gekennzeichnet,**
    **daß** die Steuerungseinrichtung so ausgelegt ist, daß sie in einem mittleren Drehzahlbereich zwischen 2500 und 3500 min$^{-1}$ und bei einem effektiven Mitteldruck zwischen 4 und 6 bar zumindest zu einem Anteil von 30% eine homogen magere Betriebsweise einstellt und daß die Abgasanlage eine Kühlvorrichtung zur Kühlung des $NO_x$-Speicherkatalysators und/oder der ihm zugeführten Abgase umfaßt.

13. Kraftfahrzeug nach Anspruch 12,
    **dadurch gekennzeichnet,**
    **daß** der homogen-Mageranteil zumindest 40% beträgt.

14. Kraftfahrzeug nach Anspruch 13,
    **dadurch gekennzeichnet,**
    **daß** der homogen-Mageranteil zumindest 50% beträgt.

15. Kraftfahrzeug nach einem der Ansprüche 12 bis 14,
    **dadurch gekennzeichnet,**
    **daß** die Kühlvorrichtung

    - eine Steuerungseinrichtung für die Kühlleistung und/oder
    - Führungseinrichtungen für eine Kühlluftströmung und/oder
    - ein anderes Kühlmittel als Luft umfaßt und/oder
    - zumindest eine um 50% höhere Kühlleistung als eine dem Ottomotor zugeordnete herkömmliche Abgasanlage ohne zusätzliche Kühlvorrichtung

    besitzt.

16. Kraftfahrzeug nach Anspruch 15,
    **dadurch gekennzeichnet,**
    **daß** die Führungseinrichtungen für eine Kühlluftströmung Luftleitbleche und/oder NACA-Düsen und/oder speziell ausgebildete strömungsbeeinflussende Schallschluck-Unterbodenkapseln umfassen.

17. Verfahren nach Anspruch 15 oder 16,
**dadurch gekennzeichnet,**
**daß** die Kühlvorrichtung eine gegenüber herkömmlichen Abgasanlagen zusätzliche Kühlleistung von zumindest 0,8 kW besitzt.

18. Kraftfahrzeug nach Anspruch 17,
**dadurch gekennzeichnet,**
**daß** die Kühlvorrichtung eine gegenüber herkömmlichen Abgasanlagen zusätzliche Kühlleistung von zumindest 1.0 kW besitzt.

19. Kraftfahrzeug nach Anspruch 18,
**dadurch gekennzeichnet,**
**daß** die Kühlvorrichtung eine gegenüber herkömmlichen Abgasanlagen zusätzliche Kühlleistung von zumindest 1,5 kW besitzt.

20. Kraftfahrzeug nach Anspruch 19,
**dadurch gekennzeichnet,**
**daß** die Kühlvorrichtung bei Vollast des Ottomotors eine gegenüber herkömmlichen Abgasanlagen zusätzliche Kühlleistung von bis zu 30 kW oder 22 kW pro Liter Hubraum oder 0,5 kW pro kW Motorleistung besitzt.

21. Kraftfahrzeug nach einem der Ansprüche 12 bis 20,
**dadurch gekennzeichnet,**
**daß** die Abgasanlage zumindest einen dem $NO_x$-Speicherkatalysator vor-und/oder nachgeschalteten Temperatursensor umfaßt und/oder der $NO_x$-Speicherkatalysator mit zumindest einem Temperatursensor versehen ist.

22. Kraftfahrzeug nach einem der Ansprüche 12 bis 21,
**gekennzeichnet durch**
einen magerlauffähigen Ottomotor nach Anspruch 23
Magerlauffähiger Ottomotor, insbesondere schichtladefähiger direkteinspritzender Ottomotor, mit einem nachgeschalteten $NO_x$-Speicherkatalysator **gekennzeichnet durch**
eine softwaremäßige und/oder konstruktive Auslegung für einen Betrieb mit einem homogen-Mageranteil von zumindest 30% in einem Drehzahlbereich zwischen 2500 und 3500 $min^{-1}$ und bei einem effektiven Mitteldruck zwischen 4 und 6 bar, wobei die Katalysatortemperatur insbesondere **durch** Kühlung der dem $NO_x$-Speicherkatalysator zugeführten Abgase und/oder des $NO_x$-Speicherkatalysators so gewählt ist, dass in mindestens 70% dieses Betriebsfensters die $NO_x$ Emission hinter dem $NO_x$-Speicherkatalysator höchstens 10 g/h und/oder der mittlere $NO_x$ Konvertierungsgrad des $NO_x$-Speicherkatalysators zumindest 70% beträgt.

**Claims**

1. Method for operating a spark-ignition engine which is capable of operating in lean-burn mode, in particular a direct-injection spark-ignition engine which is capable of operating in stratified charge mode, with a downstream $NO_x$ storage catalytic converter, by load-dependent and engine-speed-dependent setting of a stratified-lean, homogenous-lean or homogenous-stoichiometric operating mode, **characterized in that** the spark-ignition engine is at least 30% operated in homogenous-lean operating mode within an engine map comprising the values of engine speed range between 2500 and 3500 $min^{-1}$ and effective mean pressure between 4 and 6 bar, the catalytic converter temperature being selected in such a way, in particular by cooling the exhaust gases fed to the $NO_x$ storage catalytic converter and/or the $NO_x$ storage catalytic converter itself, that in at least 70% of this operating window the $NO_x$ emission downstream of the $NO_x$ storage catalytic converter amounts to at most 10 g/h and/or the mean $NO_x$ conversion degree of the $NO_x$ storage catalytic converter is at least 70%.

2. Method according to Claim 1, **characterized in that** the spark-ignition engine is operated with a homogenous-lean mode covering at least 40% of the engine map.

3. Method according to Claim 2, **characterized in that** the spark-ignition engine is operated with a homogenous-lean mode covering at least 50% of the engine map.

**4.** Method according to one of the preceding claims, **characterized in that** the spark-ignition engine and the $NO_x$ storage catalytic converter are operated in such a way that the $NO_x$ emission downstream of the $NO_x$ storage catalytic converter is at most 6 g/h and/or the mean $NO_x$ conversion degree of the $NO_x$ storage catalytic converter is at least 85%.

**5.** Method according to one of the preceding claims, **characterized in that** a cooling device having

- a controllable cooling capacity and/or
- guide devices for guiding a cooling airflow, and/or
- a coolant other than ambient air, and/or
- a cooling capacity which is at least 50% higher than a conventional exhaust system without additional cooling device assigned to the spark-ignition engine

if used to reduce the catalytic converter temperature.

**6.** Method according to Claim 5, **characterized in that** metal air-guide plates and/or NACA nozzles and/or specially designed flow-influencing sound-absorbing underbody capsules are used as guide devices for the airflow.

**7.** Method according to Claim 5 or 6, **characterized in that** a cooling device with an additional cooling capacity of at least 0.8 kW compared to conventional exhaust systems is used and/or the exhaust gases fed to the $NO_x$ storage catalytic converter are cooled to $\leq 485°C$.

**8.** Method according to Claim 7, **characterized in that** a cooling device with an additional cooling capacity of at least 1.0 kW compared to conventional exhaust systems is used and/or the exhaust gases fed to the $NO_x$ storage catalytic converter are cooled to approximately $\leq 475°C$.

**9.** Method according to Claim 8, **characterized in that** a cooling device with an additional cooling capacity of at least 1.5 kW compared to conventional exhaust systems is used and/or the exhaust gases fed to the $NO_x$ storage catalytic converter are cooled to approximately $\leq 450°C$.

**10.** Method according to Claim 9, **characterized in that** the cooling at full load of the spark-ignition engine takes place with an additional cooling power of up to 30 kW or 22 kW per litre of engine capacity or 0.5 kW per kW of engine power compared to conventional exhaust systems.

**11.** Method according to one of the preceding claims, **characterized in that** the catalytic converter temperature is determined continuously and used as control variable for setting the engine operating mode.

**12.** Motor vehicle having

- a spark-ignition engine which is capable of operating in lean-burn mode, in particular a direct-injection spark-ignition engine which is capable of operating in stratified charge mode;
- an associated control device for the load-dependent and engine-speed-dependent setting of a stratified-lean, homogenous-lean or homogenous-stoichiometric engine operating mode; and
- an exhaust system having an $NO_x$ storage catalytic converter connected downstream of the stark-ignition engine,

**characterized in that** the control device is designed in such a way that in a mean engine speed range between 2500 and 3500 $min^{-1}$ and at an effective mean pressure of between 4 and 6 bar, a homogenous-lean operating mode is set to an extent of at least 30%, and **in that** the exhaust system comprises a cooling device for cooling the $NO_x$ storage catalytic converter and/or the exhaust gases fed to it.

**13.** Motor vehicle according to Claim 12, **characterized in that** the homogenous-lean operating mode amounts to at least 40%.

**14.** Motor vehicle according to Claim 13, **characterized in that** the homogenous-lean mode amounts to at least 50%.

**15.** Motor vehicle according to one of Claims 12 to 14, **characterized in that** the cooling device comprises

- a control device for controlling the cooling capacity, and/or
- guide devices for guiding a cooling airflow, and/or
- a coolant other than air, and/or has
- a cooling capacity which is at least 50% higher than a conventional exhaust system without additional cooling device assigned to the spark-ignition engine.

16. Motor vehicle according to Claim 15, **characterized in that** the guide devices for guiding a cooling airflow comprise metal air guide plates and/or NACA nozzles and/or specially designed flow-influencing sound-absorbing underbody capsules.

17. Method according to Claim 15 or 16, **characterized in that** the cooling device has an additional cooling capacity of at least 0.8 kW compared to conventional exhaust systems.

18. Motor vehicle according to Claim 17, **characterized in that** the cooling device has an additional cooling capacity of at least 1.0 kW compared to conventional exhaust systems.

19. Motor vehicle according to Claim 18, **characterized in that** the cooling device has an additional cooling capacity of at least 1.5 kW compared to conventional exhaust systems.

20. Motor vehicle according to Claim 19, **characterized in that** at full load of the spark-ignition engine, the cooling device has an additional cooling capacity of up to 30 kW or 22 kW per litre of engine capacity or 0.5 kW per kW of engine power compared to conventional exhaust systems.

21. Motor vehicle according to one of Claims 12 to 20,
**characterized in that** the exhaust system comprises at least one temperature sensor connected upstream and/or downstream of the NOx storage catalytic converter, and/or the $NO_x$ storage catalytic converter is provided with at least one temperature sensor.

22. Motor vehicle according to one of Claims 12 to 21,
**characterized by** a spark-ignition engine that is capable of lean-burn operation according to Claim 23.

23. Spark-ignition engine which is capable of operating in lean-burn mode, in particular direct-injection spark-ignition engine which is capable of operating in stratified charge mode, with a downstream $NO_x$ storage catalytic converter, **characterized by** a software and/or structural design for operation with a homogenous-lean operating mode covering at least 30% of an engine speed range between 2500 and 3500 $min^{-1}$ at an effective mean pressure between 4 and 6 bar, the catalytic converter temperature being selected in such a way, in particular by cooling the exhaust gases fed to the $NO_x$ storage catalytic converter and/or the $NO_x$ storage catalytic converter itself, that in at least 70% of this operating window the $NO_x$ emission downstream of the $NO_x$ storage catalytic converter amounts to at most 10 g/h and/or the mean $NO_x$ conversion degree of the $NO_x$ storage catalytic converter is at least 70%.

**Revendications**

1. Procédé pour commander un moteur à allumage commandé fonctionnant avec un mélange pauvre, en particulier un moteur à allumage commandé à injection directe, à charge stratifiée, avec un catalyseur accumulateur de $NO_x$ installé à la suite, par un réglage, en fonction de la charge et du régime, du mode de fonctionnement avec un mélange pauvre stratifié, un mélange pauvre homogène ou un mélange stoechiométrique homogène, **caractérisé en ce que** l'on fait fonctionner le moteur à allumage commandé avec un mélange pauvre homogène à au moins 30 % à l'intérieur d'un diagramme caractéristique avec les valeurs de plage de régime entre 2500 et 3500 $min^{-1}$ et de pression moyenne effective entre 4 et 6 bars, dans lequel la température du catalyseur est choisie, notamment par refroidissement des gaz d'échappement envoyés au catalyseur accumulateur de $NO_x$ et/ou du catalyseur accumulateur de $NO_x$, de telle façon que, dans au moins 70 % de cette fenêtre de fonctionnement, les émissions de $NO_x$ après le catalyseur accumulateur de $NO_x$ s'élèvent au maximum à 10 g/h et/ou que le taux moyen de conversion des $NO_x$ du catalyseur accumulateur de $NO_x$ soit au moins de 70 %.

2. Procédé selon la revendication 1, **caractérisé en ce que** l'on fait fonctionner le moteur à allumage commandé avec une fraction pauvre homogène sur au moins 40 % du diagramme caractéristique.

**3.** Procédé selon la revendication 2, **caractérisé en ce que** l'on fait fonctionner le moteur à allumage commandé avec une fraction pauvre homogène sur au moins 50 % du diagramme caractéristique.

**4.** Procédé selon l'une quelconque des revendications précédentes, **caractérisé en ce que** l'on fait fonctionner le moteur à allumage commandé et le catalyseur accumulateur de $NO_x$ de telle façon que les émissions de $NO_x$ après le catalyseur accumulateur de $NO_x$ s'élèvent au maximum à 6 g/h et/ou que le taux moyen de conversion des $NO_x$ du catalyseur accumulateur de $NO_x$ soit au moins de 85 %.

**5.** Procédé selon l'une quelconque des revendications précédentes, **caractérisé en ce que**, pour la diminution de la température du catalyseur, on utilise un dispositif de refroidissement avec

- une puissance de refroidissement réglable, et/ou
- des dispositifs de guidage pour un courant d'air de refroidissement, et/ou
- un autre agent de refroidissement que l'air ambiant, et/ou
- une puissance de refroidissement plus élevée d'au moins 50 % qu'une installation de gaz d'échappement conventionnelle associée au moteur à allumage commandé sans dispositif de refroidissement supplémentaire.

**6.** Procédé selon la revendication 5, **caractérisé en ce que** l'on utilise comme dispositifs de guidage pour le courant d'air des déflecteurs d'air et/ou des buses NACA et/ou des capsules de bas de caisse insonorisantes influençant l'écoulement, spécialement conçues.

**7.** Procédé selon la revendication 5 ou 6, **caractérisé en ce que** l'on utilise un dispositif de refroidissement avec une puissance de refroidissement supplémentaire d'au moins 0,8 kW par rapport aux installations de gaz d'échappement conventionnelles et/ou on refroidit les gaz d'échappement envoyés au catalyseur accumulateur de $NO_x$ à $\leq 485°C$.

**8.** Procédé selon la revendication 7, **caractérisé en ce que** l'on utilise un dispositif de refroidissement avec une puissance de refroidissement supplémentaire d'au moins 1,0 kW par rapport aux installations de gaz d'échappement conventionnelles et/ou on refroidit les gaz d'échappement envoyés au catalyseur accumulateur de $NO_x$ à environ $\leq 475°C$.

**9.** Procédé selon la revendication 8, **caractérisé en ce que** l'on utilise un dispositif de refroidissement avec une puissance de refroidissement supplémentaire d'au moins 1,5 kW par rapport aux installations de gaz d'échappement conventionnelles et/ou on refroidit les gaz d'échappement envoyés au catalyseur accumulateur de $NO_x$ à environ $\leq 450°C$.

**10.** Procédé selon la revendication 9, **caractérisé en ce que** le refroidissement à pleine charge du moteur à allumage commandé est effectué avec une puissance de refroidissement supplémentaire pouvant atteindre 30 kW ou 22 kW par litre de cylindrée ou 0,5 kW par kW de la puissance du moteur, par rapport aux installations de gaz d'échappement conventionnelles.

**11.** Procédé selon l'une quelconque des revendications précédentes, **caractérisé en ce que** l'on détermine en continu la température du catalyseur et on l'utilise comme grandeur de commande pour régler le mode de fonctionnement du moteur.

**12.** Véhicule automobile avec

- un moteur à allumage commandé fonctionnant avec un mélange pauvre, à injection directe, notamment un moteur à allumage commandé à injection directe à charge stratifiée,
- un dispositif de commande associé pour le réglage, en fonction de la charge et du régime, d'un mode de fonctionnement du moteur avec un mélange pauvre stratifié, un mélange pauvre homogène ou un mélange stoechiométrique homogène; et
- une installation de gaz d'échappement installée après le moteur à allumage commandé, avec un catalyseur accumulateur de $NO_x$,

**caractérisé en ce que** le dispositif de commande est conçu de telle façon qu'il règle un mode de fonctionnement avec un mélange pauvre homogène au moins pour une fraction de 30 % dans une plage moyenne de régime entre 2500 et 3500 $min^{-1}$ et une pression moyenne effective entre 4 et 6 bars, et **en ce que** l'installation de gaz d'échappement comprend un dispositif de refroidissement pour le refroidissement du catalyseur accumulateur de $NO_x$ et/ou

des gaz d'échappement envoyés au catalyseur accumulateur de $NO_x$.

13. Véhicule automobile selon la revendication 12, **caractérisé en ce que** la fraction de mélange pauvre homogène vaut au moins 40 %.

14. Véhicule automobile selon la revendication 13, **caractérisé en ce que** la fraction de mélange pauvre homogène vaut au moins 50 %.

15. Véhicule automobile selon l'une quelconque des revendications 12 à 14, **caractérisé en ce que** le dispositif de refroidissement présente

   - un dispositif de commande pour la puissance de refroidissement, et/ou
   - des dispositifs de guidage pour un courant d'air de refroidissement, et/ou
   - un autre agent de refroidissement que l'air et/ou
   - une puissance de refroidissement au moins 50 % plus élevée qu'une installation de gaz d'échappement conventionnelle associée au moteur à allumage commandé sans dispositif de refroidissement supplémentaire.

16. Véhicule automobile selon la revendication 15, **caractérisé en ce que** les dispositifs de guidage pour un courant d'air de refroidissement comprennent des déflecteurs d'air et/ou des buses NACA et/ou des capsules de bas de caisse insonorisantes influençant l'écoulement spécialement conçues.

17. Véhicule automobile selon la revendication 15 ou 16, **caractérisé en ce que** le dispositif de refroidissement possède une puissance de refroidissement supplémentaire d'au moins 0,8 kW par rapport aux installations de gaz d'échappement conventionnelles.

18. Véhicule automobile selon la revendication 17,
**caractérisé en ce que** le dispositif de refroidissement possède une puissance de refroidissement supplémentaire d'au moins 1,0 kW par rapport aux installations de gaz d'échappement conventionnelles.

19. Véhicule automobile selon la revendication 18,
**caractérisé en ce que** le dispositif de refroidissement possède une puissance de refroidissement supplémentaire d'au moins 1,5 kW par rapport aux installations de gaz d'échappement conventionnelles.

20. Véhicule automobile selon la revendication 19, **caractérisé en ce que** le dispositif de refroidissement à pleine charge du moteur à allumage commandé présente une puissance de refroidissement supplémentaire pouvant atteindre 30 kW ou 22 kW par litre de cylindrée ou 0,5 kW par kW de la puissance du moteur, par rapport aux installations de gaz d'échappement conventionnelles.

21. Véhicule automobile selon l'une quelconque des revendications 12 à 20, **caractérisé en ce que** l'installation de gaz d'échappement comprend au moins un capteur de température installé avant et/ou après le catalyseur accumulateur de $NO_x$ et/ou le catalyseur accumulateur de $NO_x$ est pourvu d'au moins un capteur de température.

22. Véhicule automobile selon l'une quelconque des revendications 12 à 21, **caractérisé par** un moteur à allumage commandé fonctionnant avec un mélange pauvre, selon la revendication 23.

23. Moteur à allumage commandé fonctionnant avec un mélange pauvre, notamment moteur à allumage commandé à injection directe, à charge stratifiée, avec un catalyseur accumulateur de $NO_x$ installé à la suite, **caractérisé par** une conception informatisée et/ou constructive pour un fonctionnement avec une fraction de mélange pauvre homogène d'au moins 30 % dans une plage de régime entre 2500 et 3500 $min^{-1}$ et à une pression moyenne effective entre 4 et 6 bars, dans lequel la température du catalyseur est choisie, notamment par refroidissement des gaz d'échappement envoyés au catalyseur accumulateur de $NO_x$ et/ou du catalyseur accumulateur de $NO_x$, de telle façon que, dans au moins 70 % de cette fenêtre de fonctionnement, les émissions de $NO_x$ après le catalyseur accumulateur de $NO_x$ s'élèvent au maximum à 10 g/h et/ou que le taux moyen de conversion des $NO_x$ du catalyseur accumulateur de $NO_x$ soit au moins de 70 %.

FIG. 1